# EUROPEAN PATENT APPLICATION

(11) **EP 1 760 610 A1**
(43) Date of publication of application: **07.03.2007**
(21) Application number: 05291811.7
(22) Date of filing: 31.08.2005
(51) Int. Cl.: G06F 17/30

(54) **Method for managing shared data and related device**

(71) Applicant: FRANCE TELECOM, 75015 Paris (FR)
(72) Inventor: Alom, Saiful, W4 XS London (GB); Chaudhry Kashif, W4 XS London (GB); Meslin-Weber, Stephane, W4 XS London (GB)
(74) Representative: Loisel, Bertrand

(57) **Abstract**

Method for managing data stored in a database (29-30;41) and shared by a plurality of applications (20-22;32-33) at least some of which are implemented in a device, the device being provided with a data model module (27-28;40) capable of updating the database and retrieving data from the database. According to the method, the data model module updates the database on notification of a change in data used by at least one of the applications, and the data model module notifies at least one of the applications when the database has been updated.

## Description

The present invention relates to the management of data shared by a plurality of applications.

It is common to share data between several applications, since it avoids using several databases storing identical data. Data sharing can also be dictated by usage patterns.

A problem posed by data sharing is to always keep an updated version of the data, although data could be changed by any application. This is particularly sensitive when some of the applications may be run simultaneously.

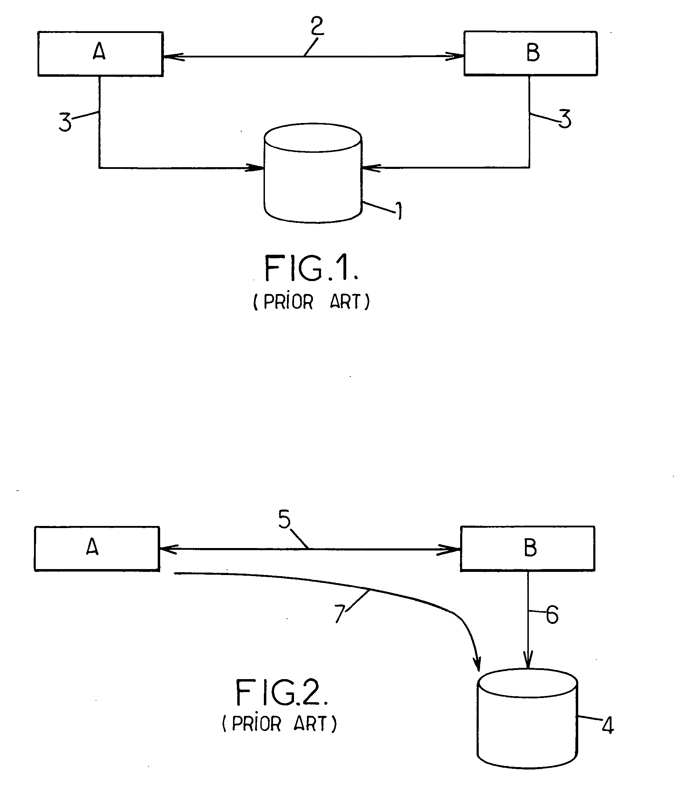

FIG.1-3 illustrate some known methods to manage shared data.

In the example of FIG.1, each application A or B can individually access the database 1 storing the shared data (arrows 3). Messaging 2 is used between applications A and B for synchronisation. This means that each access to the database 1 from one of the application is notified to the other application. Such coordination ensures that the applications A or B always use an updated version of the data.

In the example of FIG.2, only the application B can directly access the database 4 (arrow 6). The access from application A has to go through the application B (proxy access represented by the arrow 7). Every access to the database 4 is thus controlled by the application B, which avoids that each application could access, and possibly modify, data independently. Messaging 5 is used between the applications A and B to control the access to the database.

However, both cases require a tight coupling between the applications, since at least one of them must have an explicit knowledge of the other. Such coupling occurs in the synchronisation and the data access.

Such tight coupling is undesirable as it affects maintainability, reusability and flexibility. Maintainability and reusability are important where numerous device types exist and short product generations compress development lifecycles.

Moreover, the above approach gives rise to a large amount of messaging between the applications and also large synchronisation overheads to ensure data integrity.

In case a large number of applications are implemented, synchronisation and direct data access relationships quickly escalate. This is not compatible with use within a constrained device, i.e. a device having limited resources in terms of memory and CPU (Central Processing Unit) speed for instance.

Methods for reducing the overhead of synchronisation and data access relationships have been developed for use specifically on desktops and servers.

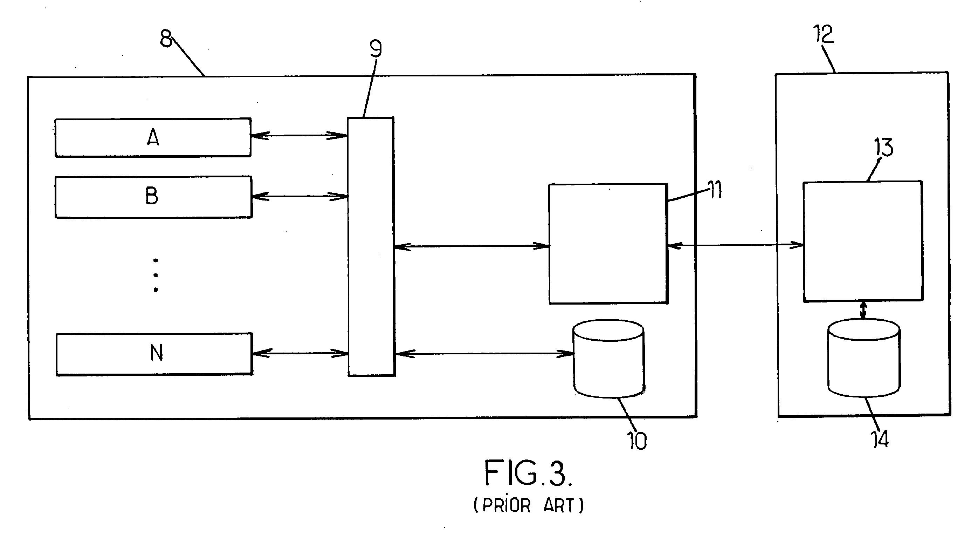

Such methods are illustrated in the example of FIG.3, in which a desktop 8 including a single shared database 10 implements applications A, B, ..., N. A bus 9 is used for carrying inter-application messaging and is connected to the database 10. In this example, for illustration purposes only, the desktop 8 has been represented as a client capable of communicating, via a live update client 11 and a corresponding live update server 13, with a server 12 having its own database 14.

Using a messaging bus for inter-application reduces but does not eliminate the requirement for explicit knowledge of other applications. A number of messaging software and middleware are available and could be used such as the Java Message Service (JMS), IBM's MQSeries, Swift, and Tibco Rendezvous.

Even in this case, there still exists a coupling between the applications through the bus. Moreover, such methods may be designed for server and desktop use, but they are not suitable for resource constrained devices.

An object of the present invention is to provide a method for managing shared data reducing the disadvantages of the known methods.

A more particular object of the present invention is to provide a method for managing shared data reducing the coupling between the applications.

Another object of the present invention is to provide a lightweight solution for managing shared data, adapted to resource constrained devices.

The invention thus proposes a method for managing data stored in a database and shared by a plurality of applications at least some of which are implemented in a device, the device being provided with a data model module capable of updating the database and retrieving data from the database. According to the method, the data model module updates the database on notification of a change in data used by at least one of the applications, and the data model module notifies at least one of the applications when the database has been updated.

The data model module thus regulates read and write access to the database, which ensures data integrity. With this mechanism, the applications can always work on updated data.

Moreover, the undesirable coupling existing in the prior art solutions does not occur here. In particular, no messaging occurs directly between the applications.

Due to its simplicity, this mechanism can be carried out in a constrained device, having limited resources, for instance in terms of memory and CPU speed and usage.

The behaviour of the applications and the data model module and the interaction therebetween can be based on the Model-View-Controller (MVC) design pattern, although other possibilities would be suitable as well. In this case, each application acts as a controller, and optionally as a view, and the data model module acts as a model. Advantageously, the applications and the data model module implement predefined template objects comprising functions in accordance with MVC.

On request of at least one of the notified applications, the data model module can further retrieve and return the updated data. In this way, the notified applications dispose from the updated data.

The notification of at least one of the applications by the data model module when the database has been updated can pass through a queue. This allows a simple and efficient mode of notification.

Advantageously, the notified applications correspond to a defined class known by the data model module. They can vary depending on the data changed. Indeed, some applications could be interested in certain types of data, whereas they would not be in other types of data they do not use when run.

Moreover, some of the applications may be capable of interacting with display means of the device. In this case, data intended to be displayed could be notified to such applications by the data model module.

The invention also proposes a device implementing at least one of a plurality of applications sharing data stored in a database, the device comprising a data model module comprising means for updating the database on notification of a change in data used by at least one of the applications of said plurality, and means for notifying at least one of the applications of said plurality when the database has been updated.

Some applications of said plurality could be implemented by another entity, like a device or system.

The device could comprise display means arranged for interacting with at least one of the applications of said plurality. It could be portable, such as a mobile phone or a personal digital assistant. It could comprise means for exchanging data with a distant entity over the air.

The invention also proposes a computer program product comprising code instructions for implementing the above-mentioned method, when loaded and run at least partly in a device.

Other specific features and advantages of the present invention will be presented in the following description of non-limiting embodiments, with reference to the appended drawings, in which:
- FIG.1-3, described above, give schematic representations of known methods for managing shared data;
- FIG.4 gives an outline of the control flow in an MVC application;
- FIG.5 gives a schematic representation of a data management according to the invention;
- FIG.6 gives a schematic representation of a data management example according to the invention; and
- FIG.7 gives a UML diagram of a possible implementation of the invention.

The invention is described herein after in an example where the Model-View-Controller (MVC) design pattern is used as an implementation of the data sharing and messaging mechanism. Nevertheless, it should be noted that the objects, classes and functions which will be defined are not restricted for use within the MVC design pattern. Other patterns or architectures can be adapted to utilise the present invention, as will be apparent for one skilled in the art.

The MVC pattern was defined by Trygve Reenskaug in the study "Thing-Model-View-Editor; an example from a planning system" of May 1979 and the study "Models-Views-Controllers" of December 1979.

To put it briefly, the MVC defines as an architecture which separates the data model, the user interface and the control logic into three distinct modules. It was initially thought as a software design pattern.

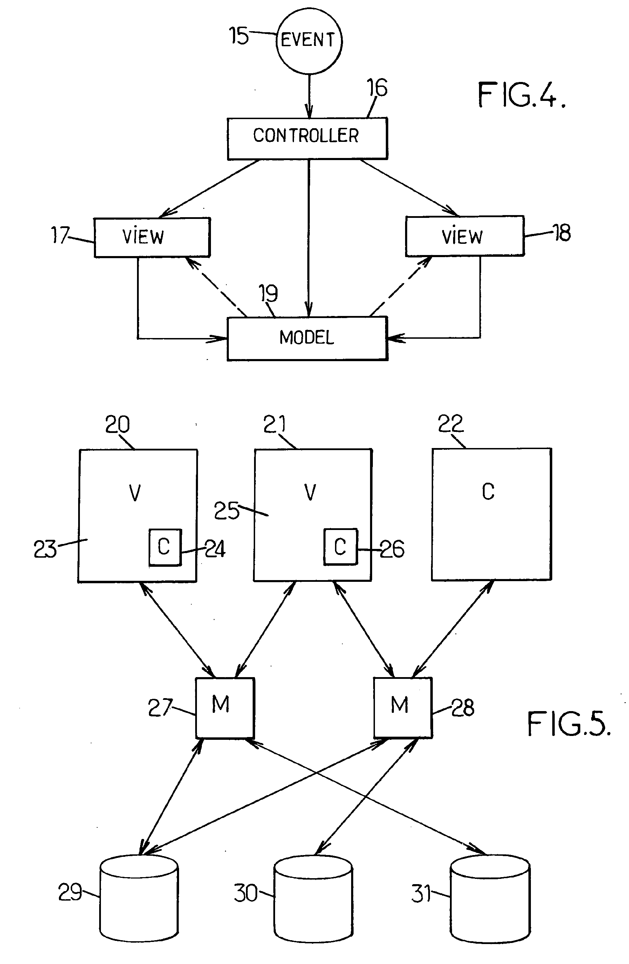

FIG.4 schematically illustrates the MVC architecture. The model 19 is a representation of the information on which an application to be constructed operates. The views 17-18 get data from the model 19 and put them into a form suitable for interaction, for instance with a user interface. The model 19 can also update the views 17-18, especially after a change in data (dotted arrows). As for the controller 16, it can update the model 19 and the views 17-18 depending on an occurring event 15.

Such separation is convenient for the software developers, since they can change the code corresponding to a view, without changing the model for instance. The MVC design pattern also allows programs to be almost platform-independent (Java, C++, etc.).

As will be described below, the present invention makes use of new objects and classes defined for the model, views and controller, in its MVC based embodiment, to allow data sharing and messaging between applications, at least some of which being implemented in a device.

More particularly, some template objects are defined. They each contain a list of functions with no implementation (e.g. signatures of functions). The main template objects are listed below:
- DataModel: it contains functions which are required to be implemented in a model. One of these functions is for notifying interested parties (e.g. views and controllers) of data changes. Some other functions are for adding or removing listeners to notification of data changes, and for getting a list of the current listeners to notification of data changes. Other functions aim at getting data from a database.
- MutableDataModel: this template object is mutable (changeable). It contains additional functions as to the ones that are defined in the DataModel, which are required to be implemented in a model.
- DataListener: it contains functions which are required to be implemented in a controller or a view. These functions allow parties, interested in data sharing, to receive notifications of data changes.
- Selectable: it contains functions which are required to be implemented in a view where it needs to access data in the form of a list. These functions provide a means to select data from a list.

In addition, some classes are also defined with the invention. Each class contains actual implementation of selected functions from one of the above template objects. The main classes are listed below:
- AbstractDataModel: it contains actual implementation of selected functions from the DataModel template object. The use of AbstractDataModel provides flexibility in the implementation, since a model is thus able to implement only a subgroup of functions.
- AbstractMutableDataModel: it contains actual implementation of selected functions from the MutableDataModel template object. It also extends AbstractDataModel. The use of AbstractMutableDataModel provides flexibility in the implementation, since a model is thus able to implement only a subgroup of functions from MutableDataModel and AbstractDataModel.
- DataEvent: it contains data notification information. It is passed from DataModel to DataListener when a data change occurs.
- DataListener: it contains actual implementation of the DataListener template object. It listens for data notifications via DataEvents. Data changes information can thus be received with this class.
- DataQueue: this class manages a queue of data notifications. DataEvents can be added to the queue in order to be notified to listeners and can be removed from the queue once the corresponding event has been notified.

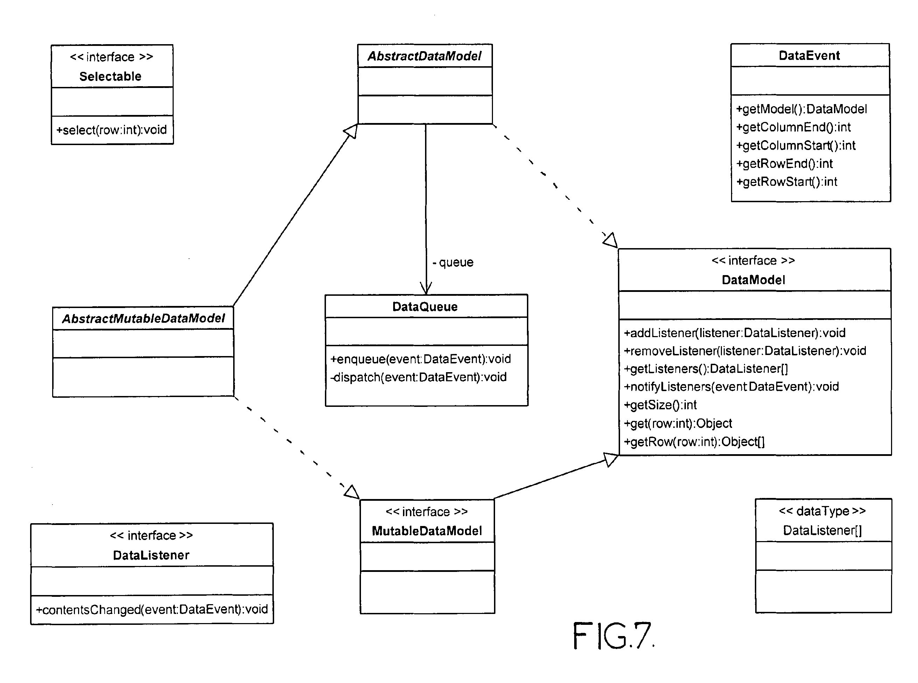

The above objects and classes are shown in a UML (Unified Modelling Language) diagram in FIG. 7. This diagram shows the role and interaction between said objects and classes as explained above, using a representation which will be appreciated by one skilled in the art, especially the developers.

In the following, the above-defined notions will be explained in more detail in their application to the data sharing and messaging.

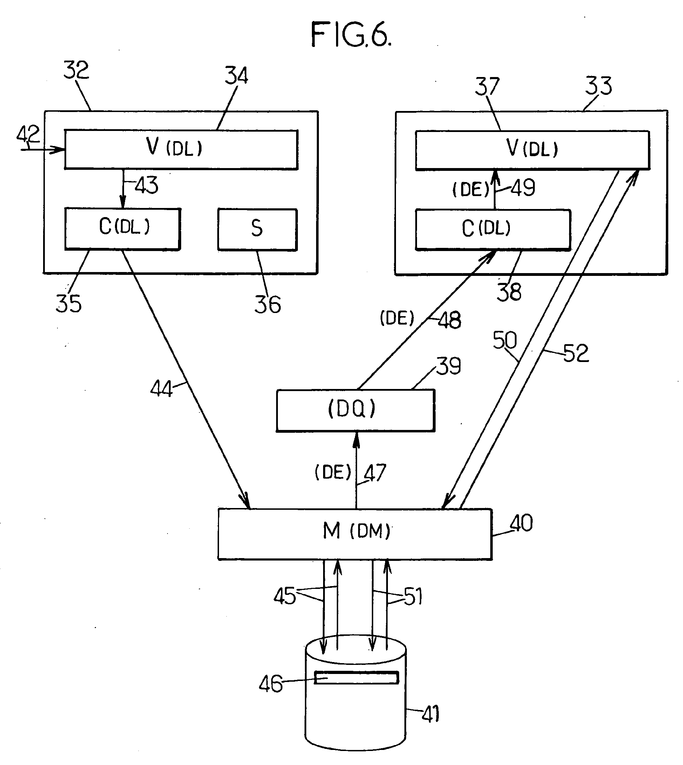

FIG.5 illustrates an example of mechanism according to the invention. It shows a high level view of the mechanism which will be appreciated by one, even non-developer, skilled in the art.

All the modules represented in FIG.5 could be incorporated in a device, especially a constrained device, such as mobile phone, a personal digital assistant (PDA) or a set top box for instance. The device can have means to exchange data with a distant entity, like a server. Advantageously, these means could be arranged for exchanging data over the air. In case of a mobile phone or a personal digital assistant, such means could be radiocommunication means for example. Alternately, only some of the modules could be incorporated in a device, whereas others could be part of another device or system.

Every module represented in FIG.5 can be a physical module, i.e. an electronic component, but in most cases, it will rather be a soft module, i.e. some instructions code run on a device. Thus, the mechanism described herein after can be carried out with a computer program loaded and run on a device.

The example of FIG.5 shows three distinct applications 20-22 which must share data. The data are stored on three different databases 29-31. For instance, the database 29 contains general data that all three applications 20-22 need to operate. The database 30 contains device status information which may be needed by only the two applications 21-22. Finally, the database 31 contains call history information which may be needed by the application 20 only for example, if this application is the only one carrying out calls.

All three applications 20-22 include a controller (22,24,26) in the meaning of MVC, which analyses occurring events and informs an appropriate model 27 or 28 accordingly.

If the device incorporating the modules of FIG.5 comprises display means, which could have any form like a screen or speaker for example, some of the applications could interact with such display means. In the illustrated example, it has been considered that only the applications 20 and 21 can interact with a display means of the device. Thus, the applications 20 and 21 each include a view (23,25) in the meaning of MVC, which can help displaying information received from a corresponding model 27 or 28. In contrast, the application 22 does not include a view, since it is not intended to display information. For example, the application can be in charge of exchanging data with a distant entity like a server (not represented in FIG.5).

The device of FIG.5 also includes models 27-28 in the meaning of MVC, which can access a database they are connected to. These data model modules can change data in such database and also retrieve data from such database.

In the illustrated example, both applications 20-21 have relationships with the model 27 and both applications 21-22 have relationships with the model 28. Besides, the model 27 is connected to both databases 29 and 31 and the model 28 is connected to both databases 29 and 30. This scheme is adapted to the particular applications 20-22 run by the device. But, of course, it should be understood that any other relationships between the modules could be used instead depending on the type of the applications sharing data, provided that the defined hierarchy (here, an MVC architecture) is respected.

The interaction between the modules is as follows: in case a change occurs in data used by one of the applications, say the application 20, for example after an action of the device user, the corresponding controller, the controller 24 in this example, informs the appropriate model, the model 27 in this example, of the change. The model then updates the appropriate database, say the database 29, with the changed data.

When a data change has occurred in the database, like the database 29 in the above example, the appropriate model, the model 27 in the example, notifies the interested parties, e.g. the view 25 or the controller 26 of the application 21, of the change. The notifications can further include information about the old and/or the new data. Afterwards, the application 21 can use updated data. For instance, the view 25 can interact with the display means of the device, in order to show the updated data.

According to such mechanism, it will be understood that a proper data sharing between several applications is performed, since the data are updated by a data model module, avoiding direct access to the database from the applications and the data changes are notified to the interested applications, so that they can always be provided with the updated data.

Moreover, it is clear from what precedes that no tight coupling between the applications exists, since the models manage access to the databases. No messaging occurs directly between the applications and no explicit knowledge of the applications is necessary between each other.

In practice, this mechanism is achieved by implementing the template objects defined above in the different modules. Mainly, the views 23 and 25 can implement DataListener, the controllers 22, 24 and 26 can implement DataListener, and the models 27 and 28 can implement DataModel for example.

The data sharing mechanism and the use of the defined template objects and classes will now be described more into details on a use case with reference to FIG.6.

This use case can take place in a constrained device, for example a mobile client. This device implements two different applications sharing data. The application 32 is an address book application and the application 33 is a calendar application.

Like for the general example of FIG.5, the device of FIG.6 comprises different modules whose behaviour and relationships depend on their position in the chosen design pattern (here, the MVC pattern). The model, views and controllers used in the device of FIG.6 have been respectively represented with their first letter M, V and C. The objects and classes implemented by each module are also indicated in brackets.

The address book application 32 includes a controller 35 implementing DataListener (DL) and a view 34 also implementing DataListener (DL). It further includes a Selectable (S) class 36 which identifies the address book in the form of a list and can help selecting a particular entry. The view 34 can interact with display means of the device. Thus, the address book identified by the Selectable class 36 could be displayed on the device through the view 34.

Similarly, the calendar application 33 includes a controller 38 implementing the DataListener template object (DL). It also includes a view 37 implementing the DataListener template object (DL), through which calendar information can be displayed on the device. But, in contrast with the view 34 of the address book application 32, the calendar content is not displayed in the form of a list. Therefore, the use of the Selectable class is not required in the application 33.

The data model module 40 implements DataModel (DM) in the illustrated example and ensures the access to the database 46 storing data shared between the applications 32-33. Alternately, the model 40 could implement AbstractDataModel, MutableDataModel or AbstractDataModel.

Advantageously, DataModel will be available from the runtime environment, for example through standard programmer interfaces, or through some helper application, as a singleton, i.e. such that it has only one instance at a time. This will ensure that data integrity remains by mandating a specific route for data modifications. However, more complex construction and provision patterns (e.g. more than one DataModel) are also possible.

A data queue 39 is also present in the device of FIG.6. It implements the DataQueue (DQ) class.

To illustrate the data sharing mechanism, it is considered, in the use case described with reference to FIG.6, that the device user wants to modify an anniversary date for a contact from the address book. According to the mechanism described below, the new anniversary date is propagated to the calendar.

To achieve this, the user first opens up the address book (arrow 42). The latter is thus displayed through the view 34. The address book is presented to the user in the form of a list with the aid of the Selectable class 36. The user then selects the contact and modifies the corresponding anniversary date (arrow 42). The controller 35 is informed of the modification (arrow 43). However, it should be understood that other changes in data could be detected directly by the controller without going through a view, in particular when the change does not result from a modification made through a display means.

The controller 35 then passes the new anniversary date to the model 40 (arrow 44), which updates the database 41 accordingly (arrows 45). Schematically, this update can consist of a modification of the data field 46 in the database 41, corresponding to the anniversary date of said contact.

This update is an event for which a DataEvent (DE) class is generated. This DataEvent is added to the queue 39 by the model 40 (arrow 47), in order to notify the interested parties implementing DataListener, as indicated in the DataModel implemented by the model 40.

The queue 39 dispatches the DataEvent to the controller 39 of the calendar application 33, which implements DataListener (arrow 48). Any dispatching method may be used by the queue 39. In particular, dispatching may be asynchronous and the order of notification may not be specified or guaranteed.

Since the calendar 33 is an application having an interaction with the display means of the means, the controller 39 sends the DataEvent to the view 37 also implementing DataListener (arrow 49).

On notification, the view 37 analyses the content of the received DataEvent and retrieves a reference of the model 40 stored in it. With this reference, the view 37 is capable of sending a request to the model 40 in order to get the new anniversary date (arrow 50).

With use of appropriate functions of DataModel it implements, the model 40 gets the content of the data field 46 in the database 41, that is the new anniversary date for said contact (arrows 51).

The model 40 finally sends the new anniversary date to the view 37 of the calendar application 33, which updates itself with the new date. Thus, if the device user opens up the calendar, he will see the new anniversary date in it, while the old anniversary date will no more appear.

The fact that the model 40 regulates read and write access to the database 41, thanks to the DataModel template object it implements, ensures data integrity. Moreover, no undesirable coupling occurs between the applications 32 and 33. In particular, no messaging is exchanged between these applications.

Of course, many other possibilities than the ones described in the example with reference to FIG.6 exist. For instance, while FIG.6 shows that only the controller 38 is directly notified with the DataEvent by the model 40, the view 37, also implementing DataListener, could be notified directly. To achieve this, the view 37 should register with DataModel of the model 40 on initialisation. It is deregistered on destruction.

Moreover although FIG.6 only shows the view 37 retrieving data from the model 40, the controller 38 could also retrieve data from the model 40 via the received DataEvent. More generally, it is the responsibility of views or controllers to respond to update DataEvent notifications in an appropriate manner (visual updates, further requests, etc).

It should also be understood that, although the change in data used by an application and the notification of other applications have been described as consecutive steps in the above example, there may be different cases. For example, the database 41 of FIG.6 could be updated directly without resulting from the use of any application (e.g. insertion of an updated memory card inside the device). In such case, the model 40 implementing DataModel could notify every interested views and/or controllers of any application accordingly.

In the above example all the applications were run on a single device. However, one or more applications could be run on another device or system. In an advantageous embodiment of the invention, some applications on a constrained device share data with applications on portals. This provides a richer and more fulfilling experience to users. It represents a means to increase data usage by creating applications that are reliant on portal services.

It will be appreciated by one skilled in the art that the present invention requires very limited device resources in terms of memory and CPU usage for instance. This provides means to create more complex applications and services relying on data sharing. It also provides the opportunity to introduce a greater degree of OTA (Over The Air) application data sharing.

It should also be noted that the reduction of data sharing complexity provided by the present invention and the use of data event driven processes improve the time and ease for development.

## Claims

1. Method for managing data stored in a database (29-30;41) and shared by a plurality of applications (20-22;32-33) at least some of which are implemented in a device, the device being provided with a data model module (27-28;40) capable of updating the database and retrieving data from the database, wherein the data model module updates the database on notification of a change in data used by at least one of the applications, and wherein the data model module notifies at least one of the applications when the database has been updated.

2. Method as claimed in claim 1, wherein, on request of at least one of the notified applications, the data model module (27-28;40) further retrieves and returns the updated data.

3. Method as claimed in claim 1 or 2, wherein the notification of at least one of the applications by the data model module (27-28;40) when the database (29-30;41) has been updated passes through a queue (39).

4. Method as claimed in any one of the preceding claims, wherein the notified applications correspond to a defined class (DL) known by the data model module.

5. Method as claimed in any one of the preceding claims, wherein at least some of the applications (20-21;32-33) are capable of interacting with display means of the device.

6. Method as claimed in any one of the preceding claims, wherein each one of the applications (20-22;32-33) acts as a controller (22,24,26;35,38), and optionally as a view (23,25;34,37), and the data model module (27-28;40) acts as a model according to the Model-View-Controller design pattern.

7. Method as claimed in claim 6, wherein each one of the applications (20-22;32-33) and the data model module (27-28;40) implement at least one predefined template object (DL,DM) comprising functions in accordance with the Model-View-Controller design pattern.

8. Device implementing at least one of a plurality of applications (20-22;32-33) sharing data stored in a database (29-30;41), the device comprising a data model module (27-28;40) comprising means for updating the database on notification of a change in data used by at least one of the applications of said plurality, and means for notifying at least one of the applications of said plurality when the database has been updated.

9. Device according to claim 8, comprising display means arranged for interacting with at least one of the applications (20-21 ;32-33) of said plurality.

10. Device according to claim 8 or 9, said device being portable, such as a mobile phone or a personal digital assistant.

11. Device according to any one of claims 8 to 10, further comprising means for exchanging data with a distant entity over the air.

12. Computer program product comprising code instructions for implementing the method as claimed in any one of claims 1 to 7, when loaded and run at least partly in a device.
